# EUROPÄISCHE PATENTANMELDUNG

(11) **EP 1 267 578 A2**
(43) Veröffentlichungstag der Anmeldung: **18.12.2002**
(21) Anmeldenummer: 02405220.1
(22) Anmeldetag: 21.03.2002
(51) Int. Cl.: H04N 7/20

(54) **Verteilung unterschiedlicher digitaler satellitengestützter Fernseh, Radio-und Datendienste**

(30) Priorität: 17.04.2001 CH 20010694
(71) Anmelder: FISCHER, Fritz, CH-6028 Herlisberg (CH)
(72) Erfinder: FISCHER, Fritz, CH-6028 Herlisberg (CH)
(74) Vertreter: Göhring, Robert, Dipl.-Ing.

(57) **Zusammenfassung**

System zur Verteilung digitaler, satellitengestützter Fernseh-, Radio und Datenkanäle an eine Anzahl von Teilnehmern über ein einzelnes Kabel, unter Verwendung standardisierter Empfangskonverter (LNC) mit lokalen Oszillatorfrequenzen von 9,75 GHz, 10,6 GHz und 10,75 GHz sowie Wellenleiterfiltern oder Filtern im Zwischenfreqenzbereich oder eine Kombination solcher Filter.

## Beschreibung

Die Erfindung betrifft ein System zur Verteilung unterschiedlicher digitaler satellitengestützer Fernseh- Radio- und Datenkanäle ab einer oder mehrerer Antennen mit einem oder mehreren Empfangskonvertern an mehrere Anschlüsse nach dem Oberbegriff des Anspruchs 1, des Anspruchs 2 und des Anspruchs 3.

Zur Zeit werden zu diesem Zweck im wesentlichen folgende Systeme benutzt.

Eines dieser Systeme besteht aus einer Antenne, die Signale einer Polarität empfängt, einem oder mehreren Konvertern (LNB) und Kabeln, die die LNB mit einer sogenannten Kopfstation verbinden. Diese Kopfstation besteht aus einer Anzahl FM-Demodulatoren/AM-Modulatoren, einem Schaltelement, einer Stromversorgung, Verbindungsbrücken und Lastkomponenten. Daran angeschlossen ist ein einziges Verteilkabel mit Auskopplern und Antennensteckdosen . Dieses System hat den Nachteil, dass es für jeden empfangenen Satellitenkanal eine Demodulator/Modulator Einheit benötigt. Soll die Anzahl der zu empfangenden Satellitenkanäle erhöht werden, ist auch die Anzahl der notwendigen FM-Demodulatoren/AM-Modulatoren zu erhöhen. Jeder einzelne FM-Demodulator/AM-Modulator, mit dem sowohl die Frequenzdemodulation als auch die Amplitudenmodulation durchgeführt wird, ist kostenaufwändig. Die Kosten des Systems erhöhen sich erheblich, wenn die Anzahl der zu verteilenden Satellitenkanäle erhöht wird. Schon in relativ kleinen Gemeinschaftsantenneninstallationen mit einer kleinen Anzahl von Benutzern ergeben sich bereits bei wenigen empfangenen Satellitenkanälen erhebliche Kosten. Die Übertragung im Hausnetz erfolgt zudem nicht digital sondern analog und lässt auch keine Daten Kanäle zu.
Es gibt eine ganze Reihe von Verteilsystemen in der ersten Zwischenfrequenz.
Bei der sogenannten Sternverteilung wird zu jedem Empfänger eine eigene Koxialzuleitung erstellt. Als Empfangskonverter werden sogenannte Universalkonverter eingesetzt, je nach Anzahl der Anschlüsse doppelte, vierfache, achtfache Konverter oder sogenannte Universal-Quattro Empfangskonverter mit nachgeschalteten Multischaltern verwendet. Universal-Quattro Empfangskonverter weisen vier Ausgänge auf, jeweils einen für die untere und die obere Empfangsfrequenz horizontaler Polarisation und für die untere und die obere Empfangsfrequenz vertikaler Polarisation. Beim Empfang mehrerer Satelliten werden sogenannte DiseqC (digital satellite equipment control) Umschalter verwendet. Dabei werden von jedem Anschluss her die Empfangsfrequenzebene durch Ein- und Ausschalten eines 22 Kilohertz-Signales gewählt, für die Auswahl der Polarisationsebene wird die Speisespannung von 13V auf 18V umgeschaltet und zur Umschaltung der DiseqC Schalter werden Schaltbefehlte auf einem 22 Kilohertzträger moduliert. Diese aufwändige Schaltung erfolgt in entgegengesetzter Richtung zum empfangenen Signal und bedingt dadurch die Tatsache, dass zu jedem Anschluss ein eigenes Koaxialkabel verlegt werden muss.
Bei einem weiteren System, der sogenannten Kaskadierung, erfolgt die Verteilung von Satellitenkanälen bis zum Systembenutzer ebenfalls in der ersten Zwischenfrequenz.. Die Signale der Satellitenkanäle werden also frequenzmoduliert (z.B. im Frequenzbereich zwischen 950 MHz und 2150 MHz) verteilt. Dieses System erfordert aber für den Empfang von Signalen die von unterschiedlichen Polaritäten oder von mehr als einem Satelliten stammen, mehr als ein einziges Verteilkabel . Die Installation zusätzlicher Verteilkabel kann in bereits bestehenden Anlagen aufgrund räumlicher Gegebenheiten, zu kleinen Leerrohrdurchmessern in den Gebäuden, in denen die zusätzlichen Verteilkabel zu installieren wären, sehr aufwändig oder eventuell ausgeschlossen sein. Weiterhin erfordert dieses System nach dem Stand der Technik mehrere Schalteinrichtungen, um unterschiedliche Verteilkabel auszuwählen und auf dem ausgewählten Verteilkabel übertragene Signale abzugreifen was ebenfalls erhebliche Kosten verursacht und durch die Schaltsignale Empfangsstörungen auftreten können.

Aus dem US-Patent 5,073,930 ist ein Verfahren und ein System zum Empfang und Verteilung von Fernsehsignalen bekannt, die von Satelliten übertragen worden sind. Dieses vorbekannte System ist in der Weise strukturiert, dass Low-Noise Verstärkern (LNA) und Low-Noise Block-Konvertern (LNB) sogenannte Power Splitter nachgeschaltet sind, wobei jede Übertragungsleitung am Ausgang eines Low-Noise-Block-Konverters (LNB) in 8 Übertragungsleitungen aufgesplittet wird. Diese Übertragungsleitungen werden über ein Verbindungsbusnetzwerk auf acht Satellitentransponder-Prozessoren geführt. Die Satellitentransponder-Prozessoren setzen jeweils Signale eines Kanals in eine neue Frequenzlage um. Ausgangsseitig sind die Satellitentransponder-Prozessoren mit Transponder-Kombinationseinrichtungen verbunden. Die Transponder-Kombinationseinrichtungen führen dann die von den Satellitentransponder-Prozessoren gebildeten Signale zusammen. Weiterhin sind den Transponder-Kombinationseinrichtungen Power Inserter nachgeschaltet, die ausgangsseitig mit mehreren Verteilkabeln verbunden sind. Das bekannte System ist damit schaltungstechnisch komplex ausgestaltet.

Auch aus EP 0740434 ist ein System bekannt, welches dem Benutzer über ein Verteilkabel vorgebbare Kanäle zur Verfügung stellt, die individuell mittels kanalindividuellen Frequenzumsetzern aus Signalen ausgewählt werden. Diese Frequenzumsetzer verteuern das System erheblich, weil für jede empfangene Frequenz ein Frequenzumsetzer zum Einsatz gelangen muss. Im weiteren benötigt ein solches System eine Stromversorgung für die Frequenzumsetzer sowie eine Programmiereinheit.

Aus der DE-OS 41 17 208 A1 ist ein Gerät für Satellitenfernseh-Empfangseinrichtungen bekannt, wobei Fernsehsignale verarbeitet werden, die von einer Parabol-Antenne empfangen werden und horizontal polarisierte Kanäle sowie vertikal polarisierte Kanäle aufweisen. Zur Vermeidung einer aufwändigen Verkabelung werden die horizontal polarisierten Kanäle und die vertikal polarisierten Kanäle voneinander getrennt und blockweise in getrennte Frequenzbänder umgesetzt. Die so getrennten Blöcke von Kanälen werden auf eine gemeinsame Leitung geschaltet. Eine Kombination von Filtern ermöglicht die Unterdrückung unerwünschter Signale und schafft somit Platz für die gewünschten Programme. Das bekannte Gerät ermöglicht lediglich die blockweise Umsetzung von Kanälen und bezieht sich auf den Empfang analoger Signale. Zum Empfang von 32 analoger Sender zu ermöglichen werden Empfangskonverter benötigt, welche spezielle nicht handelsübliche Oszillatorfrequenzen aufweisen und speziell für dieses System herzustellen wären und zusätzlich wird angeregt die obere Eingangsfrequenz der Satelliteneingangstuner zu erweitern und somit den Empfang von 32 Programmen zu ermöglichen.
Speziell anzufertigende Empfangskonverter sind natürlich um einiges kostspieliger als in grossen Stückzahlen hergestellte handelsübliche Empfangskonverter. Das gleiche trifft auf speziell anzufertigende Satellitenempfänger zu.

Ein ähnlich strukturiertes System ist auch aus der Europäischen Patentanmeldung 0 597 783 bekannt. Dieses System setzt zwar standardmässig hergestellte Konverter ein um die Signale in die Zwischenfrequenz umzuwandeln, benötigt jedoch mindestens bei einem Konverter einen nachgeschalteten Mischer um die Signale voneinander zu trennen. Das System bezieht sich nicht auf den Empfang unterschiedlicher Polaritäten sondern auf den Empfang von wenigstens zwei Satelliten. Das System weist ebenfalls eine Kombination von Filtern auf.

Digitale Satellitenempfänger weisen in Europa heute eine standardmässigen Eingangsfrequenzbereich von 950 Megahertz bis 2150 Megahertz auf.
Die bekannten empfangsseitig verwendeten handelsüblichen Konverter arbeiten standardmässig mit folgenden Oszillatorfrequenzen:
- in Europa: 9.750 Gigahertz Oszillatorfrequenz für den unteren Frequenzbereich von 10.700 Gigahertz bis 11.75 Gigahertz und 10.600 Gigahertz Oszillatorfrequenz für den oberen Frequenzbereich von 11.750 Gigahertz bis 12,750 Gigahertz.
- in Nordamerika betragen die handelsüblichen Oszillatorfrequenzen 10.750 Gigahertz und 11.250 Gigahertz..
Alle diese Ausführungen werden in grossen Stückzahlen hergestellt und sind deshalb preisgünstig am Markt erhältlich. Die erste Satelliten Zwischenfrequenz resultiert aus der Subtraktion der Oszillatorfrequenz von der Eingangsfrequenz.

Ausgehend von diesem Stand der Technik bezweckt die Erfindung ein System zur Verteilung von Signalen der eingangs genannten Art anzugeben, welche die Verteilung einer grossen Kanalanzahl ermöglicht und schaltungstechnisch in einfacher Weise ausgestaltet ist.
Der Erfindung liegt weiter die Aufgabe zugrunde, mit standardmässig hergestellten handelsüblichen und deshalb kostengünstigen Empfangskonvertern sowie standardmässig hergestellten handelsüblichen und deshalb kostengünstigen Digitalempfängern satellitengestützte digitale Fernseh-Radio und Datensignale auf ein einziges Kabel abzuleiten und zwar auf eine Art und Weise, dass weder Frequenzumsetzer noch irgendwelche Schaltelemente notwendig sind um mit einem einzigen Kabel eine Mehrzahl von Anschlüssen mit einer grossen Zahl von Diensten zu bedienen. Weiter bezweckt die Erfindung die Möglichkeit, Signale nicht nur blockweise einzuspeisen, sondern individuell auch zusätzliche Signale ausserhalb dieser Blöcke und/oder von anderen Satelliten einzuspeisen.

Zur Lösung dieser Aufgabe sind entweder die kennzeichnenden Merkmale des Anspruches 1, des Anspruches 2 oder des Anspruches 3 vorgesehen. Vorteilhafte Ausgestaltungen der Erfindung ergeben sich aus den Unteransprüchen. Weitere Vorteile und Einzelheiten der Erfindung ergeben sich aus der nun folgenden Beschreibung mehrerer Ausführungsbeispiele unter Hinweis auf die Zeichnungen.

Die Erfindung soll nachfolgend so erklärt werden, dass in diesen Beispielen möglichst viele deutschsprachige digitale Radio- und Fernsehsatellitenprogramme empfangen werden können wobei einige Möglichkeiten aufgezeigt werden, auf spezifische Programminteressen von Bevölkerungsgruppen und/oder Staaten Rücksicht zu nehmen. Auch sollen die Möglichkeiten des gemeinsamen Empfanges von Datendiensten aufgezeigt werden Diese Beispiele dienen lediglich zur Erklärung der Erfindung und sollen die Erfindung nicht etwa auf deutschsprachige Programme beschränken.
Tabelle 1 zeigt das Frequenzspektrum der Satelliten Astra 1E, Astra 1F und Astra 1G auf der Orbitalposition 19,2° östlich des Nullmeridians von Greenwich.
Tabelle 2 zeigt die Frequenzlage in der ersten Zwischenfrequenz der Astra Satelliten 1E, 1F, 1G und zwar vor und nach der Umsetzung in die erste Zwischenfrequenz mit handelsüblichen Empfangskonvertern mit den standardmässig eingesetzten Lokaloszillatorfrequenzen von 10.6 Gigahertz und von 10.75 Gigahertz.. Es gibt auch vereinzelte andere Frequenzen, welche digital genutzt werden wie zum Beispiel die vertikal polarisiert Frequenz 10.788 auf Astra 1D. Beispielsweise die Satellitensysteme von Eutelsat senden interessante Programmpakete und Datendienste, welche mit dieser Erfindung selektiv eingefügt werden können.

**Tabelle 1**

| **Frequenzspektrum der Satelliten Astra 1E, Astra 1F und Astra 1G** | | | |
|---|---|---|---|
| Transponder 6511.720 GHz | HORIZONTAL | VERTIKAL | Transponder |
| | | 11.739 GHz | 66 |
| 67 | 11.759 GHz | | |
| | | 11.778 GHz | 68 |
| 69 | 11.798 GHz | | |
| | | 11.817 GHz | 70 |
| 71 | 11.837 GHz | | |
| | | 11.856 GHz | 72 |
| 73 | 11.876 GHz | | |
| | | 11.895 GHz | 74 |
| 75 | 11.915 GHz | | |
| | | 11.934 GHz | 76 |
| 77 | 11.954 GHz | | |
| | | 11.973 GHz | 78 |
| 79 | 11.993 GHz | | |
| | | 12.012 GHz | 80 |
| 81 | 12.032 GHz | | |
| | | 12.051 GHz | 82 |
| 83 | 12.071 GHz | | |
| | | 12.090 GHz | 84 |
| 85 | 12.110 GHz | | |
| | | 12.129 GHz | 86 |
| 87 | 12.149 GHz | | |
| | | 12.168 GHz | 88 |
| 89 | 12.188 GHz | | |
| | | 12.207 GHz | 90 |
| 91 | 12.227 GHz | | |
| | | 12.246 GHz | 92 |
| 93 | 12.266 GHz | | |
| | | 12.285 GHz | 94 |
| 95 | 12.305 GHz | | |
| | | 12.324 GHz | 96 |
| 97 | 12.344 GHz | | |
| | | 12.363 GHz | 98 |
| 99 | 12.382 GHz | | |
| | | 12.402 GHz | 100 |
| 101 | 12.422 GHz | | |
| | | 12.441 GHz | 102 |
| 103 | 12461 GHz | | |
| | | 12.480 GHz | 104 |
| 105 | 12516 GHz | | |
| | | 12.522 GHz | 106 |
| 107 | 12545 GHz | | |
| | | 12.551 GHz | 108 |
| 109 | 12.574 GHz | | |
| | | 12.581 GHz | 110 |
| 111 | 12.604 GHz | | |
| | | 12.611 GHz | 112 |
| 113 | 12.633 GHz | | |
| | | 12.640 GHz | 114 |
| 115 | 12.663 GHz | | |
| | | 12.670 GHz | 116 |
| 117 | 12.692 GHz | | |
| | | 12.699 GHz | 118 |
| 119 | 12.722 GHz | | |
| | | 12.729 GHz | 120 |

**Tabelle 2**

| **Frequenzlage in der ersten Zwischenfrequenz der Astra Satelliten 1E, 1F, 1G** | | | | | |
|---|---|---|---|---|---|
| HORIZONTAL | LOF 10600 MHz | LOF 10750 MHz | VERTIKAL | LOF 10600 MHz | LOF 10750 MHz |
| | ZF MHz. | ZF MHz | | ZF MHz | ZF MHz |
| 11.720 GHz | 1120 | 970 | | | |
| | | | 11.739 GHz | 1139 | 989 |
| 11.759 GHz | 1159 | 1009 | | | |
| | | | 11.778 GH | 1178 | 1028 |
| 11.798 GHz | 1198 | 1048 | | | |
| | | | 11.817 GHz | 1217 | 1067 |
| 11.837 GHz | 1237 | 1087 | | | |
| | | | 11.856 GHz | 1256 | 1106 |
| 11.876 GHz | 1276 | 1126 | | | |
| | | | 11.895 GHz | 1295 | 1145 |
| 11.915 GHz | 1315 | 1165 | | | |
| | | | 11.934 GHz | 1334 | 1184 |
| 11.954 GHz | 1354 | 1204 | | | |
| | | | 11.973 GHz | 1373 | 1223 |
| 11.993 GHz | 1393 | 1243 | | | |
| | | | 12.012 GHz | 1412 | 1262 |
| 12.032 GHz | 1432 | 1282 | | | |
| | | | 12.051 GHz | 1451 | 1301 |
| 12.071 GHz | 1471 | 1321 | | | |
| | | | 12.090 GHz | 1490 | 1340 |
| 12.110 GHz | 1510 | 1360 | | | |
| | | | 12.129 GHz | 1529 | 1379 |
| 12.149 GHz | 1549 | 1399 | | | |
| | | | 12.168 GHz | 1568 | 1418 |
| 12.188 GHz | 1588 | 1438 | | | |
| | | | 12.207 GHz | 1607 | 1457 |
| 12.227 GHz | 1627 | 1477 | | | |
| | | | 12.246 GHz | 1646 | 1496 |
| 12.266 GHz | 1666 | 1516 | | | |
| | | | 12.285 GHz | 1685 | 1535 |
| 12.305 GHz | 1705 | 1555 | | | |
| | | | 12.324 GHz | 1724 | 1574 |
| 12.344 GHz | 1744 | 1594 | | | |
| | | | 12.363 GHz | 1763 | 1613 |
| 12.382 GHz | 1782 | 1632 | | | |
| | | | 12.402 GHz | 1802 | 1652 |
| 12.422 GHz | 1822 | 1672 | | | |
| | | | 12.441 GHz | 1841 | 1691 |
| 12.461 GHz | 1861 | 1711 | | | |
| | | | 12.480 GHz | 1880 | 1730 |
| 12.516 GHz | 1916 | 1766 | | | |
| | | | 12.522 GHz | 1922 | 1772 |
| 12.545 GHz | 1945 | 1795 | | | |
| | | | 12.551 GHz | 1951 | 1801 |
| 12.574 GHz | 1974 | 1824 | | | |
| | | | 12.581 GHz | 1981 | 1831 |
| 12.604 GHz | 2004 | 1854 | | | |
| | | | 12.611 GHz | 2011 | 1861 |
| 12.633 GHz | 2033 | 1883 | | | |
| | | | 12.640 GHz | 2040 | 1890 |
| 12.663 GHz | 2063 | 1913 | | | |
| | | | 12.670 GHz | 2070 | 1920 |
| 12.692 GHz | 2092 | 1942 | | | |
| | | | 12.699 GHz | 2099 | 1949 |
| 12.722 GHz | 2122 | 1972 | | | |
| | | | 12.729 GHz | 2129 | 1979 |

### Kanalbelegung ausgewählter Frequenzen auf ASTRA und HOTBIRD

Transponder 54 Astra vertikal
Auf der Frequenz 10.788 GHz. vertikal sendet ein Programmpaket mit einem deutschsprachigen Fernsehprogramm sowie weiteren anderssprachigen Fernsehprogrammen

Transponder 65 Astra horizontal
Auf der Frequenz 11.720 GHz werden derzeit 5 Fernsehprogramme und 15 Radioprogramme des deutschen Pay-TV Anbieters Premiere World ausgesendet. Diese Programme sind nur mit einer geeigneten Dekodiereinrichtung zu empfangen

Transponder 67 Astra horizontal
Auf der Frequenz 11.759 GHz werden derzeit 9 Fernsehprogramme und 1 Radioprogramm des deutschen Pay-TV Anbieters Premiere World ausgesendet. Diese Programme sind nur mit einer geeigneten Dekodiereinrichtung zu empfangen. Das Radioprogramm ist frei empfangbar

Transponder 69 Astra horizontal
Auf der Frequenz 11.798 GHz werden derzeit 10 Fernsehprogramme des deutschen Pay-TV Anbieters Premiere World ausgesendet. Diese Programme sind nur mit einer geeigneten Dekodiereinrichtung zu empfangen

Transponder 71 Astra horizontal
Auf der Frequenz 11.837 GHz werden derzeit 9 Fernsehprogramme und 11 Radioprogramme der Allgemeinen Rundfunkanstalten Deutschlands ARD ausgesendet. Diese Programme sind frei empfangbar.

Transponder 73 Astra horizontal
Auf der Frequenz 11.876 GHz werden polnische und tschechische Fernsehprogramme ausgesendet. Diese Programme sind nur mit einer geeigneten Dekodiereinrichtung zu empfangen.
Ein Fernsehprogramm ist frei empfangbar.

Transponder 75 Astra horizontal
Auf der Frequenz 11.915 werden derzeit keine regelmässigen Programme ausgesendet.

Tansponder 77 Astra horizontal
Auf der Frequenz 11.954 GHz werden derzeit 9 Fernsehprogramme und 3 Radioprogramme des Zweiten Deutschen Fernsehens ZDF ausgesendet. Diese Programme sind frei empfangbar.

Transponder 79 Astra horizontal
Auf der Frequenz 11.993 GHz werden vorab polnische Fernseh- und Radioprogramme ausgesendet. Die Fernsehprogramme sind nur mit einer geeigneten Dekodiereinrichtung zu empfangen. Ein Fernsehprogramm und die Radioprogramme sind frei empfangbar.

Transponder 81 Astra horizontal
Auf der Frequenz 12.032 GHz werden derzeit 9 Fernsehprogramme und 3 Radioprogramme des deutschen Pay-TV Anbieters Premiere World ausgesendet. Diese Programme sind nur mit einer geeigneten Dekodiereinrichtung zu empfangen

Transponder 83 Astra horizonta
Auf der Frequenz 12.071 GHz werden derzeit 11 Fernsehprogramme des deutschen Pay-TV Anbieters Premiere World ausgesendet. Diese Programme sind nur mit einer geeigneten Dekodiereinrichtung zu empfangen

Tranponder 84 Astra vertikal
Auf der Frequenz 12.090 GHz werden derzeit 6 Fernsehprogramme des deutschen Pay-TV Anbieters Premiere World ausgesendet. Diese Programme sind nur mit einer geeigneten Dekodiereinrichtung zu empfangen

Transponder 85 Astra horizontal
Auf der Frequenz 12.110 GHz werden derzeit 7 Fernsehprogramme und 10 Radioprogramme der Allgemeinen Rundfunkanstalten Deutschlands ARD ausgesendet. Diese Programme sind frei empfangbar.

Transponder 87 Astra horizontal
Auf der Frequenz 12.149 GHz werden derzeit 4 Fernsehprogramme und 4 Radioprogramme ausgesendet. Eines der Fernsehprogramme ist verschlüsselt, die anderen Programme sind frei empfangbar.

Transponder 89 Astra horizontal
Auf der Frequenz 12.188 GHz werden derzeit 4 Fernsehprogramme der Sendeanstalt Radio Television Luxemburg, RTL ausgesendet. Diese Programme sind frei empfangbar.

Transponder 104 Astra vertikal
Auf der Frequenz 12.480 GHz werden derzeit 7 deutschsprachige Fernsehprogramme ausgesendet. Die Programme sind frei empfangbar.

Transponder 106 Astra vertikal
Auf der Frequenz 12.522 GHz werden spanische Fernsehprogramme ausgesendet. Diese Programme sind nur mit einer geeigneten Dekodiereinrichtung zu empfangen.

Transponder 108 Astra vertikal
Auf der Frequenz 12.551 GHz werden derzeit 9 Fernsehprogramme ausgesendet.. Diese Programme sind frei empfangbar. Drei davon sind deutschsprachig.

Transponder 110, Astra vertikal
Auf der Frequenz 12.581 GHz werden spanische Fernsehprogramme ausgesendet. Diese Programme sind nur mit einer geeigneten Dekodiereinrichtung zu empfangen.

Transponder 112, Astra vertikal
Auf der Frequenz 12.611 GHz werden derzeit 6 Fernsehprogramme und ein Radioprogramm ausgesendet.. Diese Programme sind frei empfangbar.

Transponder 113 Astra horizontal
Auf der Frequenz 12.633 GHz. werden derzeit Internet Datendienste ausgesendet

Tranponder 114, Astra vertikal
Auf der Frequenz 12.640 GHz.werden derzeit Internet Datendienste ausgesendet.

Transponder 115, Astra horizontal
Auf der Frequenz 12.663 GHz. werden derzeit Internet Datendienste ausgesendet

Transponder 116, Astra vertikal
Auf der Frequenz 12.670 GHz werden derzeit 2 deutschsprachige Fernsehprogramme ausgesendet.. Diese Programme sind frei empfangbar.

Transponder 117 Astra horizontal
Auf der Frequenz 12.692 GHz. werden das erste und die zweiten Fernsehprogramme des Oesterreichischen Rundfunkes ORF verschlüsselt und der Wetterkanal TW1 unverschlüsselt ausgesendet. Daneben sind eine grosse Anzahl Radioprogramme zu empfangen.

Transponder 118, Astra vertikal
Auf der Frequenz 12.699 GHz werden derzeit 10 Fernsehprogramme des Musiksenders MTV ausgesendet.. Nur das deutschsprachige Programm ist frei empfangbar..

Transponder 120, Astra vertikal
Auf der Frequenz 12.729 werden derzeit Internet Datendienste ausgesendet.

Transponder 85 HotBird horizontal
Auf der Frequenz 12.399 werden 8 Fernsehprogramme und 8 Radioprogramme der Schweizerischen Rundspruch Gesellschaft SRG ausgesendet. 7 dieser Fernsehprogramme können nur mit einer geeigneten Dekodiereinrichtung empfangen werden.

Tranponder 155 HotBird horizontal
Auf der Frequenz 11,604 GHz. werden 10 Fernsehprogramme, davon 8 frei empfangbar und davon wiederum 4 deutschsprachige Sender ausgestrahlt.

Transponder 52 - 11.766 GHz. 54 - 11.804 GHt., 60 - 11.919 GHz, 70 - 12111 und 72 - 12.149 HotBird vertikal
Diese Transponder übertragen eine grosse Anzahl frei empfangbarer italienischer Programme. Transponder 70 bietet zudem eine Auwahl anderssprachiger Programme.

Transponder 56 - 11.843 GHz., 58 - 11.881 GHz., 62 - 11.958, 64 - 11.996 GHz., 66 - 12.034 GHz. und 68 - 12.073 GHz HotBird vertikal.
Diese Transponder übertragen eine grosse Anzahl verschlüsselter italienischer Programme.

### 1.) Beschreibung der ersten Ausführungsform der Erfindung gemäss Anspruch 1

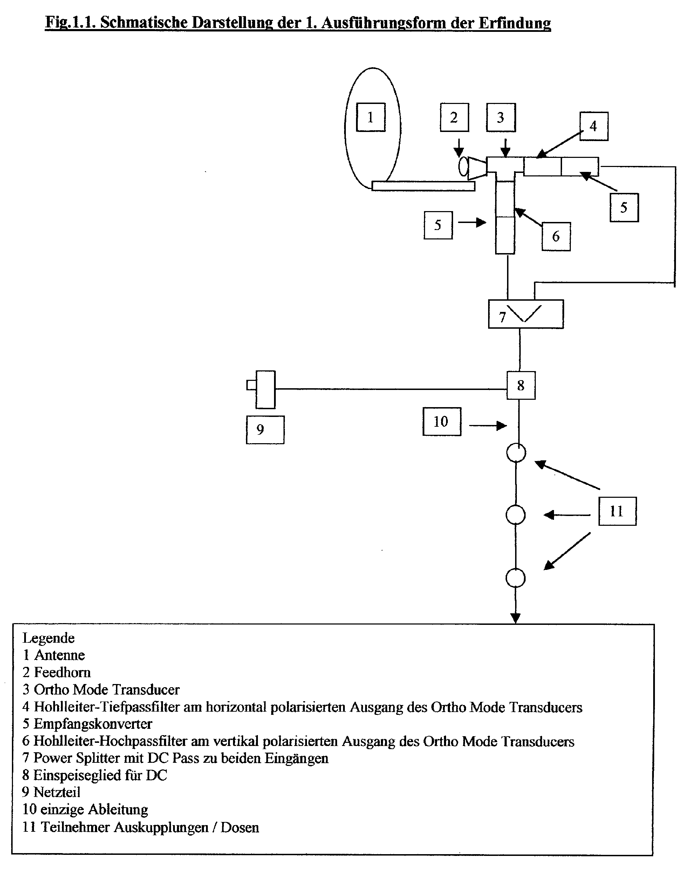

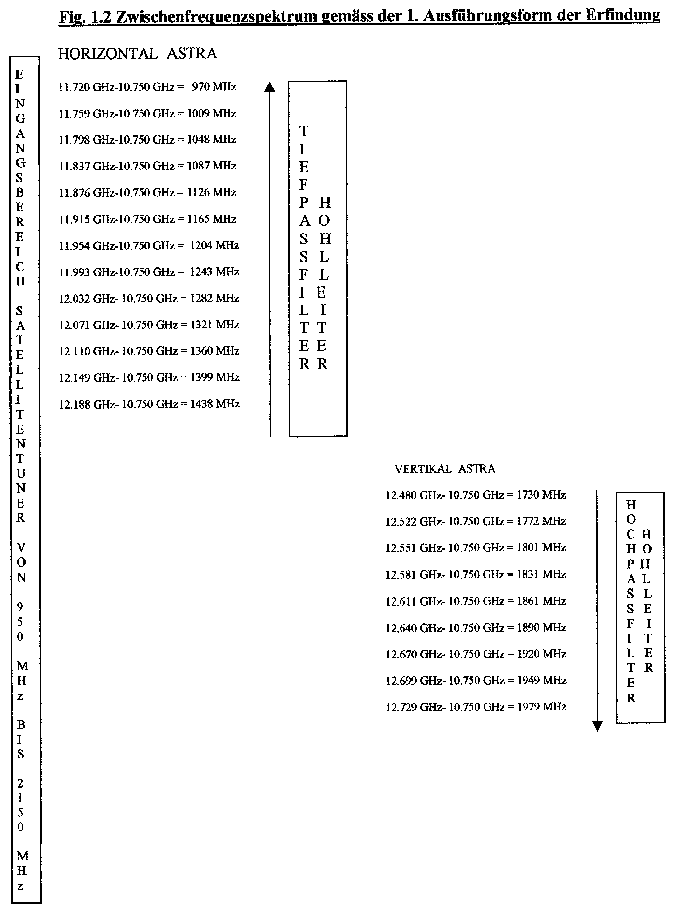

Gemäss der schematischen Darstellung in Fig. 1.1. werden satellitengestützte Radio- Fernseh und Datensignale ab dem ASTRA Satellitensystem auf der Oribitalposition 19.2° östlich von Greenwich mit der Satellitenantenne 1 empfangen und mittels einem Feedhorn 2 und eine Ortho Mode Transducer 3 in horizontal und vertikal polarisierte Signale aufgesplittet.. Die horzontal polarisierten Signale werden einem Tiefpass-Hohlleiter Filter 4 zugeführt, welcher die Frequenzen bis zum Bereich 12.22 GHz passieren lässt, oberhalb dieser Frequenz jedoch als Sperrfilter wirkt. Die vertikal polarisierten Signale werden einem Hochpass-Hohlleiter Filter 6 zugeführt, welcher die Frequenzen ab dem Bereich 12.44 GHz passieren lässt, unterhalb dieser Frequenz jedoch als Sperrfilter wirkt. Mit handelsüblichen Empfangskonvertern 5 werden die digitalen Fernseh- Radio und Datensignale empfangen und in die erste Zwischenfrequenzlage umgesetzt. In der Ausführungsform 1 können dabei entweder die standardmässig hergestellten, in Europa üblicherweise verwendeten Lokaloszillatorfrequenzen (LOF) 10.6 GHz. oder die in Nordamerka üblichen standardmässig hergestellten Empfangskonverter mit einer Lokaloszillatorfrequenz von 10.75 GHz eingesetzt werden. Auch die Kombination von Empfangskonvertern mit LOF 10.75 GHz. für den horizontalen Ausgang und LOF 10.6 GHz. für den vertikalen Ausgang ist möglich.
Es ist möglich handelsübliche Universal Quattro Empfangskonverter mit entsprechenden handelsüblichen Adapterringen einzusetzen. Empfangskonverter mit LOF 10.75 GHz. und der auf den Ortho Mode Transducer passenden Standardflange WR-75 sind handelsüblich und lassen sich ohne Adapterring auf den Ortho Mode Transducer montieren.
Nach dem Empfangskonverter für die horizontalen Signale liegen nun die Zwischenfrequenzen herrührend von den horizontal sendenden Transpondern unterhalb der Frequenz im Bereich 12.22 GHz. an. In diesen Bereich fallen die Astra Tranponder 65, 67, 69, 71, 73, 75, 77, 79, 81, 83, 85, 87, 89, 91 93 und 95.
Nach dem Empfangskonverter für die vertikalen Signale liegen, herrührend von den vertikal sendenden Transpondern oberhalb der Frequenz im Bereich von 12.44 GHz., die Zwischenfrequenzen der Astra Tranponder 102, 104, 106, 108, 110, 112, 114, 116, 118 und 120 an.
Wie aus der Liste der Kanalbelegung ausgewählter Frequenzen ersichtlich ist, umfassen die mit der Erfindung zu empfangenden Programme den grössten Teil der deutschsprachigen digitalen Fernsehund Radioprogramme. Die Zwischenfrequenzen gemäss Fig. 1.2 werden nun über den Zweiwegsplitter mit DC Pass 7 auf eine einzige Ableitung zusammengeführt und den Teilnehmerauskupplungen bzw. Dosen 11 zugeführt. Die Dosen 11 sind vorteilhafterweise so zu wählen, dass Speisespannungen der Satellitenempfänger an der Dose bereits abgeblockt werden um Störungen zu vermeiden.. Mittels einer geeigneten Stromversorgung bestehend aus DC Einspeiseglied 8 und Netzteil 9 werden die Empfangskonverter 5 mit Speisespannung versorgt.
Falls es dem Fachmann notwendig oder sinnvoll erscheint kann zwischen dem DC Einspeiseglied und dem Splitter ein Signalverstärker eingesetzt werden.

### 2.) Beschreibung der 2. Ausführungsform der Erfindung gemäss Anspruch 2

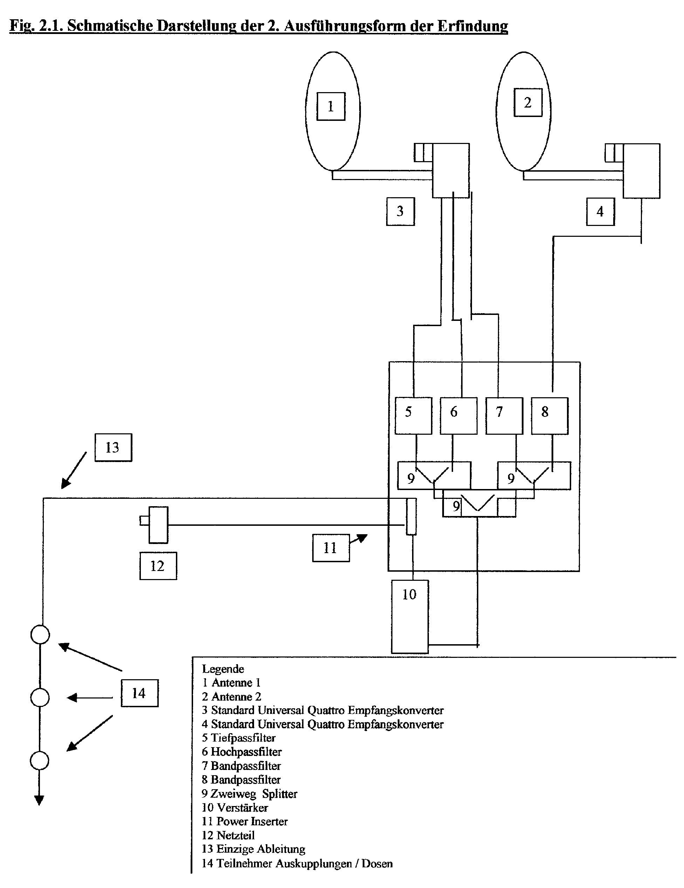

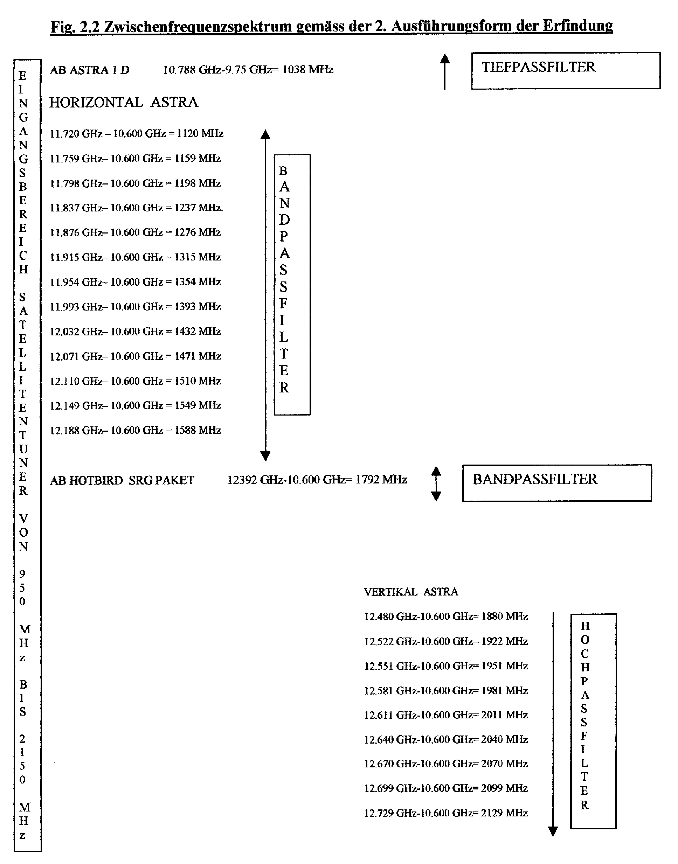

Gemäss der schematischen Darstellung des Beispiels in Fig. 2.1. werden mit den Satellitenantennen 1 ab Astra 19.2° östlich von Greenwich und 2 ab HotBird, 13° östlich von Greenwich mittels handelsüblichen Universal-Empfangskonvertern 3 und 4 satellitengestützte digitale Fernseh- Radio und Datendienste empfangen und in die erste Zwischenfrequenzlage umgesetzt. Im Ausführungsbeispiel 2 werden dabei für den Empfang der Astra Satelliten vorteilhafterweise die standardmässig hergestellten, in Europa üblicherweise verwendeten Universal Quattro Empfangskonverter eingesetzt, welche über Oszillatorfrequenzen von 9.75 Gigahertz für das untere Band und 10.6 Gigahertz für das obere Band verfügen.
Diese werden den Filtern 5, 6, und 7 zugeführt.
Im Beispiel nach Fig.2.1. wird der Vertikalausgang mit Lokaloszillatorfrequenz 9.75 GHz. dem Filter 5 zugeführt. Beim Filter 5 handelt es sich um ein Tiefpassfilter welches Frequenzen oberhalb von 1071 MHz sperrt.Der interessierende Astra Transponder 54 wird durch den Lokaloszillator LOF 9.75 GHz.auf 1038 MHz. umgesetzt und fällt damit in den offenen Bereich des Filters 5. Vergleiche auch Figur 2.2.

Beim Beispiel nach Fig 2.1 wird der Horizontalausgang mit LOF 10.6 GHz. dem Filter 6 zugeführt.. Beim Filter 6 handelt es sich um einen Bandpassfilter, welches Frequenzen zwischen 1102 MHz und 1606 MHz passieren lässt.
Die horizontalen Astra Transponder 65, 67 69, 71, 73, 75, 77, 79, 81, 83, 85, 87 und 89 werden verwertet. Gemäss Tabelle 2 werden diese Frequenzen mittels der LOF 10.6 GHz. auf einen Bereich zwischen 1120 MHz und 1588 MHz. umgesetzt. Sie fallen damit in den Bandpassbereich des Filters 6. Die anfallenden Signale unterhalb und oberhalb des Bandpassfilters werden mit dem Filter 6 ausgefiltert.. Vergleiche auch Figur 2.2.

Beim Beispiel nach Fig 2.1 wird der Vertikalausgang mit LOF 10.6 GHz. dem Filter 7 zugeführt.. Beim Filter 7 handelt es sich um einen Hochpassfilter welcher Frequenzen unterhalb von 1862 MHz. sperrt. Die vertikal Astra Transponder 104, 106, 108, 110, 112, 114, 116, 118 und 120 werden verwertet. Gemäss Tabelle 2 werden diese Frequenzen mittels der LOF 10.6 GHz. auf einen Bereich zwischen 1880 MHz und 2129 MHz. umgesetzt. Sie fallen damit in den Hochpassbereich des Filters 6. Vergleiche auch Figur 2.2.

Beim Beispiel nach Fig 2.1 ist die Antenne 2 auf das Satellitensystem HotBird auf der Orbitalposition 13° östlich von Greenwich ausgerichtet. Der Horizontalausgang der Antenne 2 des Universal Empfangkonverters 4 mit LOF 10.6 GHz. wird dem Filter 8 zugeführt.. Beim Filter 8 handelt es sich um einen Bandpassfilter für Frequenzen zwischen 1781 und 1817 MHz..
Die horizontal polarisierten Signale des HotBird Transponders 85.werden verwertet. Die Frequenz wird mittels der LOF 10.6 GHz. auf 1799 MHz. umgesetzt. Sie fällt damit in den Bandpassbereich des Filters 8. Die anfallenden Signale unterhalb und oberhalb des Hochpassfilters werden mit dem Filter 8 ausgefiltert.. Vergleiche auch Figur 2.2.

Mit dieser Konfiguration lassen sich zur Zeit 91 deutschsprachige Fernsehsender empfangen. davon sind 43 frei empfangbar und die restlichen sind mit geeigneten Dekodiereinrichtungen zu entschlüsseln. Ebenfalls sind eine grosse Anzahl Radioprogramme und einige Datendienste zu empfangen.

Würde man gemäss Figur 2.1. den Tiefpassfilter 5 statt mit dem Signal der Zwischenfrequenz 1038 MHz. herrührend aus der Sendefrequenz 10.788 minus LOF 9.75 GHz mit der Zwischenfrequenz 1004 MHz herrührend aus der Sendefrequenz 11.604 GHz des HotBird Transponders 155. minus LOF 10.6 GHz ab Antenne 2 Ausgang horizontal beschicken, was sich beispielsweise durch einen Power Splitter in der Koaxialleitung am Horizontalausgang LOF 10.6 des Empfangskonverters 4 leicht machen lässt, würde man eine Auswahl von 8 freien Fernsehprogrammen und 3 freien Radioprogrammen erhalten. In dieser Auswahl befindet sich beispieseweise auch ein Fernsehporgramm mit schweizerischem Sendefenster für Sport und Gesundheit. Auf diese Weise könnte man ein schweizerisches Publikum speziell bedienen.

Würde man den Bandpassfilter 6 statt mit den Signalen des Horizontalausganges LOF 10.6 GHz. der Antenne 1 auf Orbitalposition 19,2° östlich von Greenwich mit den Signalen des Vertikalausganges LOF 10.6 der Antenne 2 auf Orbitalposition 13° östlich von Greenwich beschicken, liessen sich ab den vertikal polarisierten Transpondern 52 bis 74 dieses Satellitensystems derzeit 64 italienische Fernsehprogramme, teils verschlüsselt, teils frei empfangen. Über die Konfiguration des Filtereinganges 7 wie in Fi.g 2.1. gezeigt liegen noch weitere italienische Fernsehprogramme und eine grosse Zahl spanischer Programme an. Mit einer solchen Lösung könnte vorab ein südeuropäisches Publikum erreicht werden.
Die Erfindung lässt dem Fachmann viele Möglichkeiten für flexible Lösungen offen und ist nicht auf die der Erklärung dienenden Beispiele beschränkt.

### 3.) Beschreibung der 3. Ausführungsform gemäss Anspruch 3

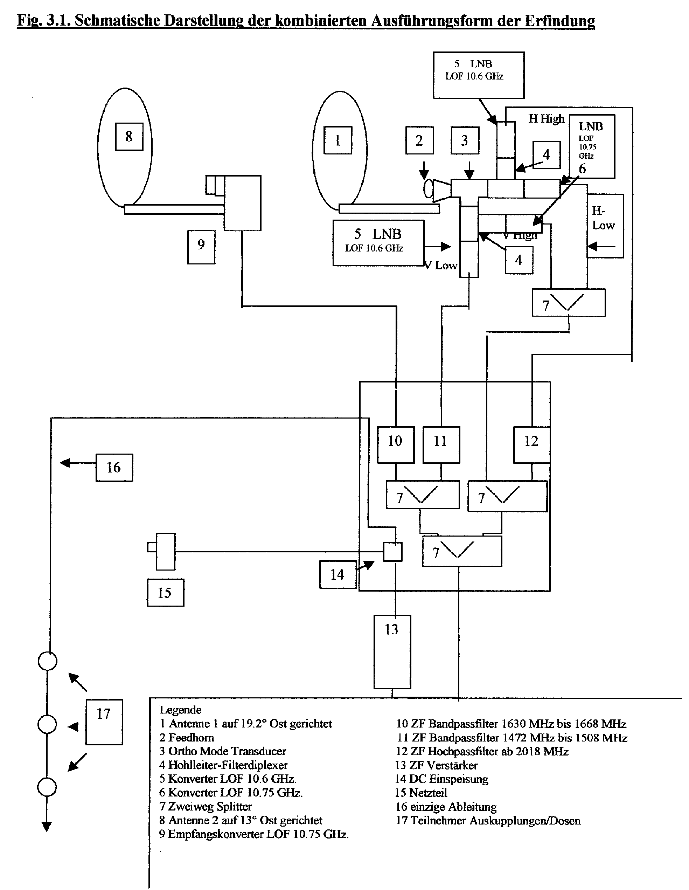

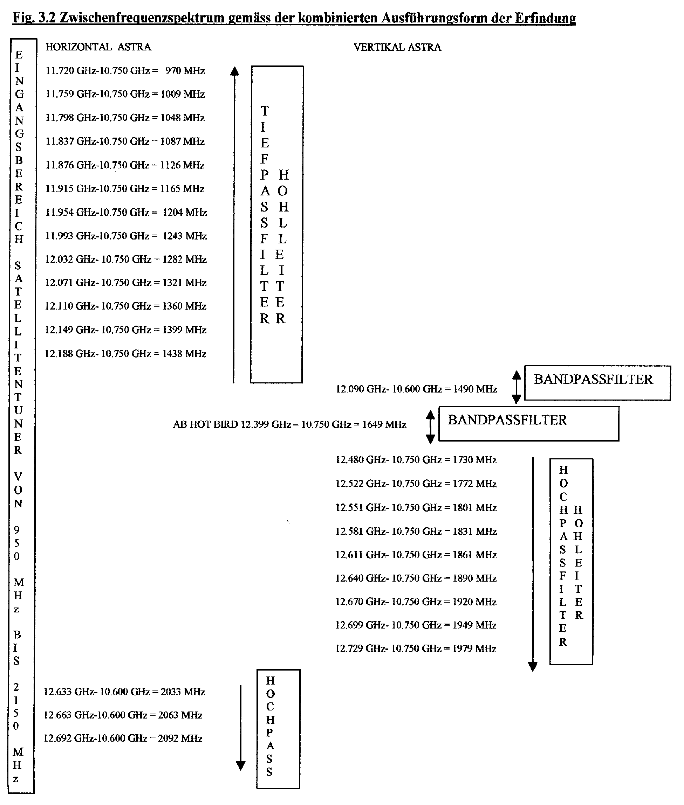

Um eine möglichst lückenlose Einspeisung aller Programme beispielsweise der Gruppe der deutschsprachigen Fernseh- und Radioprogramme sowie eine vollständige Abdeckung der Tranponder mit Internet Daten zu gewährleisten, ist es erfindungsgemäss möglich, die Ausführungsformen 1 und 2 gemäss den Ansprüchen 1 und 2 der Erfindung zu kombinieren, was mit dem Anspruch 3 abgedeckt wird.
Gemäss der schematischen Darstellung in Fig. 3.1. werden satellitengestützte Radio- Fernseh und Datensignale ab dem ASTRA Satellitensystem auf der Oribitalposition 19.2° östlich von Greenwich mit der Satellitenantenne 1 empfangen und mittels einem Feedhorn 2 und eine Ortho Mode Transducer 3 in horizontal und vertikal polarisierte Signale aufgesplittet.. Die horzontal polarisierten Signale werden einem Hohlleiter Filter-Diplexer 4 zugeführt, welcher die Frequenzen in einen oberen und in einen unteren Frequenzbereich aufteilt. Ein Ausgang des Hohlleiter Filter-Diplexers empfängt die Frequenzen unterhalb 12.22 GHz. und sperrt die höher liegenden Frequenzen während ein zweiter Ausgang die Frequenzen oberhalb 12.44 GHz empfängt und gleichzeitig die darunter liegenden Frequenzen sperrt. Die vertikal polarisierten Signale werden ebenfalls einem Hohlleiter Filter-Diplexer 4 zugeführt, welcher die Frequenzen in einen oberen und in einen unteren Frequenzbereich aufteilt. Auch hier werden am einen Ausgang des Hohlleiter Filter-Diplexers die Frequenzen unterhalb 12.22 GHz. empfangen und die höher liegenden Frequenzen gesperrt während am zweiten Ausgang die Frequenzen oberhalb 12.44 GHz empfangen und gleichzeitig die darunter liegenden Frequenzen gesperrt werden.
Mit handelsüblichen Empfangskonvertern 5 und 6 werden die digitalen Fernseh- Radio und Datensignale empfangen und in die erste Zwischenfrequenzlage umgesetzt. In der kombinierten Ausführungsform 3 ist es, im Falle des optimalen Empfanges der deutschsprachigen Fernseh- und Radioprogramme sinnvoll, den, in der Frequenz tiefer liegenden Ausgang des Hohlleiter Filter Diplexers mit horizontaler Polarisation und den, in der Frequenz höher liegenden Ausgang des Hohlleiter Filter-Diplexers mit vertikaler Polarisation mit handelsüblichen Empfangskonvertern mit LOF 10.75 GHz. (5) zu belegen. Gleichzeitig sollten die beiden anderen Ausgänge der Hohlleiter Filter-Diplexer mit handelsüblichen Empfangskonvertern mit LOF 10.6 GHz.(6) bestückt werden. Dies bietet den Vorteil, dass die handelsüblicherweise an den Satellitenempfängern vorhandene Zwischenfrequenzeingangsbandbreite zwischen 950 MHz und 2150 MHz. optimal ausgenützt werden kann.
Die Signale des Ausganges des Hohlleiter Filter-Diplexers (4) welcher die tieferen Frequenzen unterhalb 12.22 GHz in horizontaler Polarisation weiterleitet, werden unterhalb des Astra Transponders 65 durch den üblicherweise auf 950 MHz begrenzten unteren Einlassbereich des Eingangstuners des Satellitenempfängers begrenzt, während der Hohlleiter Filter-Diplexer das Frequenzband oberhalb des Bereiches 12.22 GHz. begrenzt.
Die Signale des Ausganges des Hohlleiter Filter-Diplexers welcher die höheren Frequenzen oberhalb 12.44 GHz. in vertikaler Polarisation weiterleitet, werden oben durch die Tatsache begrenzt, dass der Transponder 120 der frequenzmässig höchste vertikal polarisiert Transponder im Downlink der Astra Satelliten auf der Orbitalposition 19,2° östlich von Greenwich ist, während der Hohlleiter Filter-Diplexer den Frequenzdurchlass unterhalb 12.44 GHz. blockiert.
Damit sind diese zwei Bereiche durch die Hohlleiter Filter-Diplexer genügend begrenzt und können, wie in der Ausführungsform 1 der Erfindung über einen Zweifachsplitter auf eine Ableitung geschaltet werden.
Um nun die deutschsprachigen Programme zu empfangen, welche ausserhalb dieser Blöcke liegen, werden die Filter in der ersten Zwischenfrequenz beschickt. Auf den Astra Satelliten der Orbitalposition 19.2° östlich von Greenwich betrifft dies den Transponder 84 und den Transponder 117. Ebenfalls kann der Empfang der Transponder 113 und 115 wichtig sein, wo Internet Daten übertragen werden
Für den Empfang des Transponders 84 wird der tiefe Ausgang für vertikal polarisierte Signale des Hohlleiter Filter-Diplexers mit einem handelsüblichen Empfangskonverter mit der LOF 10.6 GHz. bestückt und die somit erreichte Zwischenfrequenz von 1490 MHz dem Zwischenfrequenz Filter 11 mit einem Bandpassbereich von 1472 bis 1508 MHz geführt. Der Filter sperrt sämtliche Frequenzen ausserhalb dieses Bereiches.
Für den Empfang der Transponder 113, 115, 117 und es darüberliegenden Transponders 119 ist die Tatsache vorteilhaft, dass der Transponder 119 die höchste horizontal polarisierte Downlinkfrequenz des Astra Satellitensystems auf der Orbitalposition 19.2° östlich von Greenwich darstellt. Da es sich um das Bandende handelt, muss der Filter 12 nach oben nicht abgrenzen und kann als Hochpassfilter im Bereich ab 2018 MHz ausgelegt werden. Für den Empfang der Transponder 113, 115, 117 und 119 wird der frequenzmässig hohe Ausgang des horizontalen Hohlleiter-Filter-Diplexer mit einem handelsüblichen Empfagskonverter mit LOF 10.6 GHz. bestückt. Die somit erzeugte Zwischenfrequenz wird dem Zwischenfrequenz Hochpassfilter 12 zugeführt, wobei die Frequenzen unterhalb von 2018 MHz gesperrt werden.
Für den Empfang des HotBird Transponders 85 wird eine Antenne 8 auf die Orbitalposition 13° östlich von Greenwich ausgerichtet. Der handelsübliche Empfangskonverter 9 mit LOF 10.75 GHz. empfängt die horizontal ausgesendeten Signale des oberen Frequenzbandes. Die somit entstehende Zwischenfrequenz von 1649 MHz wird dem Bandpassfilter 10 mit Bereich 1630 MHz. bis 1668 MHz zugeführt.
Die ausserhalb dieses Bereiches liegenden Frequenzen werden gesperrt.
Über die Zweiweg Splitter 7 werden die somit entstandenen gewünschten Frequenzbereiche auf die einzige Ableitung 16 geschaltet und den Teilnehmerauskopplungen bzw. Dosen zugeführt.
Mit dem Netzteil 15 und der DC Einspeisung 14 werden die Konverter und der allenfalls notwendige Verstärker 13 mit Betreibsspannung versorgt.
Durch geschickte Wahl von Filtern und Oszillator Frequenzen stehen dem Fachmann Möglickkeiten zwischen 1510 MHz und 1630 MHz und zwischen 2110 und dem Bandende für selektive Einspeisungen offen.

Die Tatsache, dass relativ nahe beeinanderliegende Zwischenfrequenzen durch die unterschiedlichen Oszillatorfrequenzen nicht genau übereinander liegen, mindert den notwendigen Filteraufwand.

## Patentansprüche

1. Gerät für den Gemeinschaftsempfang satellitengestützter digitaler Fernseh- Radio- und Datendienste, mit einer oder mehreren Antennen mit mehreren handelsüblichen Empfangskonvertern mit standardmässigen Oszillatorfrequenzen, **dadurch gekennzeichnet, dass** die Signale mit einem System bestehend aus Feedhorn und Ortho Mode Transducer empfangen und, je nach Art der Signale, in horizontal- und vertikal polarisierte, beziehungsweise in rechtsdrehende und linksdrehende Signale aufgesplittet werden, wonach die horizontal- und vertikal polarisierten, beziehungsweise rechtsdrehenden und linksdrehenden Signalwellen jeweils einem Hohlleiter - Filter zugeführt werden, der, je nach Bedarf ein Hohlleiter Tiefpassfilter, ein Hohlleiter Hochpassfilter oder ein Hohlleiter Bandpassfilter sein kann, wonach die gefilterten Frequenzen an den Ausgängen der Hohlleiter - Filter jeweils einem handelsüblichen Empfangskonverter mit standardmässiger Lokaloszillatorfrequenz zugeführt werden und auf diese Art blockweise getrennt in die erste Zwischenfrequenz umgesetzt werden und danach die beiden Frequenzspektren auf eine einzige gemeinsame Ableitung geschaltet werden.

2. Gerät für den Gemeinschaftsempfang satellitengestützter digitaler Fernseh- Radio und Datendienste, mit einer oder mehreren Antennen mit einem oder mehreren handelsüblichen Universal- Empfangskonvertern mit den standardmässigen Lokaloszillatorfrequenzen 9.75 GHz. und 10.6 GHz beziehungsweise und 10.75 GHz., **dadurch gekennzeichnet, dass** die Signale vom oder von den Universal-Empfangskonvertern empfangen und in die erste Zwischenfrequenz umgesetzt werden und an den Ausgängen nach Polarität und Lokaloszillatorfrequenzumsetzung getrennt jeweils einem Zwischenfrequenzfilter zugeführt werden der, je nach Bedarf ein Zwischenfrequenz Tiefpassfilter, ein Zwischenfrequenz Hochpassfilter oder ein Zwischenfrequenz Bandpassfilter sein kann, wonach die gefilterten Frequenzen an den Ausgängen mittels Splittern zusammengeführt und auf eine einzige gemeinsame Ableitung geschaltet werden.

3. Gerät für den Gemeinschaftsempfang satellitengestützter digitaler Fernseh- Radio und Datendienste mit einer oder mehreren Antennen mit mehreren handelsüblichen Empfangskonvertern mit standardmässigen Oszillatorfrequenzen, **dadurch gekennzeichnet, dass** die empfangenen Signale an mindestens einer Antenne mit einem System bestehend aus Feedhorn und Ortho Mode Transducer empfangen und, je nach Art der Signale in horizontal- und vertikal, beziehungsweise in rechtsdrehende und linksdrehende Signale aufgesplittet werden, wonach die horizontal- und vertikal polarisierten, beziehungsweise rechtsdrehenden und linksdrehenden Signalwellen jeweils einem Hohlleiter - Filter Diplexer zugeführt werden, welcher die vorher nach Polarität- beziehungwseise Drehrichtung getrennten Frequenzen in einen oberen und in einen unteren Frequenbereich aufteilt, wobei ein Ausgang des Hohlleiter - Filter - Diplexers ein bestimmtes Frequenzband unterhalb einer bestimmten Frequenz passieren lässt und die darüberliegenden Frequenzen gesperrt werden und der andere Ausgang des Hohlleiter - Filter - Diplexers ein bestimmtes Frequenzband oberhalb einer bestimmten Frequenz passieren lässt und die darunterliegenden Frequenzen gesperrt werden, wonach die derart gefilterten und nach Polarität beziehungsweise Drehrichtung getrennten Signale mit handelsüblichen Empfangkonvertern mit standardmässigen Oszillatorfrequenzen in die erste Zwischenfrequenz umgesetzt werden, wobei bestimmte Frequenzspektren bereits durch die Hohlleiter - Filter Diplexer genügend begrenzt und voneinander getrennt sind und auf eine gemeinsame Ableitung geschaltet werden können , während andere bestimmte Frequenzspektren durch die nachgeschalteten Zwischenfrequenzfilter weiter begrenzt werden müssen, bevor sie mit den bereits auf eine Ableitung zusammengeschalteten, durch die Hohlleiter - Filter Diplexer vorbestimmten Frequenzspektren auf eine einzige gemeinsame Ableitung geschaltet werden können.

4. Gerät nach den Ansprüchen 1, 2 und 3 **dadurch gekennzeichnet, dass** diese mit einem oder mehreren Stromversorgungseinspeisepunkten ausgestattet und von einem oder mehreren Netzadaptern gespeist werden.

5. Gerät nach den Ansprüchen 1, 2 und 3 **dadurch gekennzeichnet, dass** in der einzigen gemeinsamen Ableitung ein Zwischenfrequenzvesträrker eingesetzt werden kann.

6. Gerät nach den Ansprüchen 1, 2 und 3 **dadurch gekennzeichnet, dass** anstelle von mehreren Antennen eine Antenne mit mehrfacher Konverterhalterung eingesetzt werden kann woran die Konverter beziehungsweise Feedhorn an den Fokuspunkten der einfallenden Signale befestigt werden können.

7. Gerät nach den Ansprüchen 1 und 3, **dadurch gekennzeichnet, dass** Empfangskonverter mit runden Flanschen mit Adapterringen auf Bauteile mit rechteckigen WR-75 Flanschen montiert werden.

8. Gerät nach den Ansprüchen 1, 2 und 3, **dadurch gekennzeichnet, dass** handelsübliche Universal Quattro Empfangskonverter mit, nach Polarität oder Drehrichtung und nach Frequenzbändern getrennten Ausgängen verwendet werden können.

9. Gerät nach den Ansprüchen 1, 2 und 3 **dadurch gekennzeichnet**, das dank einer geeigneten Spannung der externen Stromversorgung und einem oder mehreren 22 Kilohertz Generatoren handelsübliche Universal Single oder Twin-Empfangskonverter eingesetzt werden können.

10. Gerät nach dem Anspruch 1 **dadurch gekennzeichnet, dass** sowohl Feedhorn, Ortho Mode Transducer wie auch die Empfangskonverter mit standardmässigen Oszillatorfrequenzen sowie die nachgeschaltete Ableitung auf eine einzige gemeinsame Ableitung in einem gemeinsamen Gehäuse untergebracht werden können.
